# EUROPÄISCHE PATENTSCHRIFT

(11) **EP 0 760 318 B1**
(45) Veröffentlichungstag und Bekanntmachung des Hinweises auf die Patenterteilung: **19.05.1999**
(21) Anmeldenummer: 96112937.6
(22) Anmeldetag: 12.08.1996
(51) Int. Cl.: B60S 1/52, B05B 15/10

(54) **Scheibenwascheinrichtung für Kraftfahrzeuge, insbesondere Fahrzeugscheinwerfer**
Window washing arrangement for motor vehicles, in particular for the vehicle headlights
Installation de lave-glace pour véhicules automobiles, notamment pour les phares de véhicule

(30) Priorität: 26.08.1995 DE 19531403
(43) Veröffentlichungstag der Anmeldung: 05.03.1997
(73) Patentinhaber: Hella KG Hueck & Co., 59552 Lippstadt (DE)
(72) Erfinder: Lind, Thomas, 57258 Freudenberg (DE); Orth, Peter, 59557 Lippstadt (DE); Thorn, Martin, 59510 Lippetal (DE)

(56) Entgegenhaltungen:
- EP-A- 0 511 104
- EP-A- 0 681 953
- DE-A- 3 828 999
- GB-A- 2 272 363

## Beschreibung

Die Erfindung betrifft eine Scheibenwascheinrichtung für Kraftfahrzeuge, insbesondere für Fahrzeugscheinwerfer, mit einem eine Düse aus einer Ruhelage in eine Arbeitsstellung ausfahrbaren Düsenträger, und mit einem Ventil, welches mit einem eine Aus- und Einfahrbewegung des Düsenträgers mitmachenden Deckel versehen ist, der zusammen mit dem Düsenträger von einer unter Druck gebrachten Reinigungsflüssigkeit bewegbar ist und der kurz vor Erreichen der Arbeitsstellung der Düse gegen einen ortsfesten Anschlag anschlägt und von einer eine Durchgangsöffnung des Düsenträgers verschließenden Stellung vom Düsenträger abhebt.

Eine Wascheinrichtung für Kraftfahrzeuge dieser Art ist aus der DE 38 28 999 A1 bekannt. Ein verstellbarer Düsenträger weist an einem Endabschnitt eine Düse und an dem anderen Endabschnitt eine Rollmembran auf. Die Rollmembran ist mit ihrem umlaufenden Randabschnitt zwischen zwei Gehäuseteilen fest eingespannt. Zur Düse hin führt eine durch den Düsenträger verlaufende Durchgangsöffnung für eine Reinigungsflüssigkeit. Die Düse ist durch die Reinigungsflüssigkeit von einer Ruhestellung in eine Arbeitsstellung bewegbar. Dabei drückt die Reinigungsflüssigkeit gegen die der Düse abgewandten Seite der Rollmembran. Kurt vor Erreichen der Arbeitsstellung des Düsenträgers öffnet ein Ventil die Durchgangsöffnung. Das Ventil weist einen Deckel auf, welcher durch den Druck der Reinigungsflüssigkeit zusammen mit dem Düsenträger bis zu einem Anschlag ausfahrbar ist. Der Anschlag ist zwischen dem Ventil und der Düse an die Innenseite eines Gehäuseteils angebracht und hält den Deckel beim weiteren Ausfahren des Düsenträgers in seiner Arbeitsstellung zurück. Der Deckel liegt mit einem äußeren Randabschnitt an dem Anschlag an und durch Öffnungen des Deckels strömt Reinigungsflüssigkeit zur Durchgangsöffnung des Düsenträgers hin. Aus der Düse tritt die Reinigungsflüssigkeit als ein von Tröpfchen gebildeter Sprühkegel aus. Beim Aufprallen der Tröpfchen auf eine Scheibe lösen sich Schmutzteilchen von der Scheibe. Der Reinigungsvorgang wird durch Abschalten einer Druckerzeugungseinrichtung für die Reinigungsflüssigkeit beendet. Der Düsenträger wird durch eine Druckfeder, gegen deren Kraft er in die Arbeitsstellung ausfährt, in die Ruhelage zurückgedrückt. Der Deckel wird durch eine an seiner Unterseite unter Vorspannung anliegende Druckfeder so lange am Anschlag gehalten bis der Deckel zusammen mit dem Düsenträger in die Ruhelage bewegt wird.

Hierbei ist es nachteilig, daß der Deckel mit seinem Außenrand an der Innenseite des einen Gehäuseteils geführt werden muß und somit nur bei einem sehr kurzen Verstellweg der Düse nicht verkanten kann. Außerdem kann der Anschlag zwischen dem Ventil und der Düse nicht an die Innenseite eines Gehäuseteils angebracht werden, wenn der Düsenträger zusammen mit einem Kolben dicht in einem Gehäusezylinder verschiebbar sein soll.

Aufgabe der Erfindung ist es, die im Oberbegriff des Anspruchs 1 beschriebene Scheibenwascheinrichtung für Kraftfahrzeuge, insbesondere für Fahrzeugscheinwerfer derart zu gestalten, daß die Funktion des Ventils auch bei einem sehr langen Verstellweg des Düsenträgers sicher ist und der ortsfeste Anschlag des Ventils auch dann realisierbar ist, wenn ein Führungssystem des verstellbaren Düsenträgers eine Anbringung des ortsfesten Anschlags des Ventils außerhalb des Düsenträgers in dem Bereich zwischen dem Ventil und der Düse nicht zuläßt. Diese Aufgabe wird nach der Erfindung dadurch gelöst, daß der Anschlag an dem freien Endabschnitt eines ortsfesten stangenförmigen Haltelements angebracht ist und den Rand einer Öffnung des Deckels hintergreift, durch welche das Halteelement mit Spiel hindurchgeht und daß das stangenartige Halteelement in Ruhelage der Düse in ein dicht an den Deckel angebrachtes dichtes Aufnahmeelement eintaucht, welches in der Durchgangsöffnung des Düsenträgers angeordnet ist und zwischen welchem und der Innenseite der Durchgangsöffnung ein Spalt für die Reinigungsflüssigkeit besteht. Nach einem Einschalten einer Druckerzeugungseinrichtung für die Reinigungsflüssigkeit drückt die Reinigungsflüssigkeit den Düsenträger zusammen mit dem an ihn anliegenden Deckel aus seiner Ruhelage. Kurs vor Erreichen der Endstellung des Düsenträgers schlägt der Deckel mit dem inneren Randbereich seiner Öffnung an den Anschlag des stangenförmigen Halteelementes an und wird von dem Düsenträger abgehoben. Der Düsenträger fährt ohne den Deckel weiter bis in seine Endlage. Die Reinigungsflüssigkeit kann nach dem Abheben des Deckels in die Durchgangsöffnung des Düsenträgers hineinströmen und aus der Düse als Sprühkegel austreten. Der Sprühkegel ist gebildet von vielen Wassertröpfchen, welche beim Aufprallen auf eine Scheibe Schmutzteilchen lösen. Der Deckel ist beim Aus- und Einfahren des Düsenträgers radial zur Verstellrichtung durch das in die Durchgangsöffnung hineinragende Aufnahmeelement des ortsfesten stangenförmigen Halteelement zentriert. Deshalb müssen die Außenabmessungen des Deckels nicht größer sein als zur dichten Abdeckung der Durchgangsöffnung des Düsenträgers notwendig ist. Des weiteren ist bei einem kleinen Deckel die Kraft, mit welcher der Deckel durch den Anschlag vom Düsenträger abgehoben wird, kleiner als bei einem größeren Deckel. Außerdem muß die Waschvorrichtung wegen des stangenförmigen Halteelements und seinem Aufnahmeelement nicht größer bauen als wenn die Waschvorrichtung keinen Anschlag aufweisen würde.

Die erfindungsgemäße Waschvorrichtung kann auch bei einem Führungssystem für den Düsenträger realisiert werden, welches den Düsenträger zusammen mit einem Kolben dicht in einem Gehäusezylinder verschiebt. Hierbei ist die Funktion des Ventils auch bei einem sehr langen Verstellweg sicher.

Der Deckel und das Aufnahmeelement sind einfach gestaltet und kostengünstig herstellbar, wenn das Aufnahmeelement rohrförmig ausgeführt ist, an seinem in Richtung der Düse weisenden Endabschnitt durch einen Stopfen dicht verschlossen ist, mit dem anderen Endabschnitt einstückig mit dem Deckel ausgeführt ist und die Öffnung für das stangenförmige Halteelement umgibt. Zudem ist der Deckel wegen des rohrförmigen Aufnahmeelements, welches in die Durchgangsöffnung eingreift, beim Abheben des Deckels von dem Düsenträger gut geführt.

Das Aufnahmeelement ist in der Durchgangsöffnung des Düsenträgers bei möglichst kleiner Reibung gut geführt, wenn in die Durchgangsöffnung des Düsenträgers ein hülsenförmiges Führungselement eingesetzt ist, welches mit radial nach innen gerichteten Führungsvorsprüngen an eine zylindrische Mantelfläche des Aufnahmeelements angrenzt und mit seinen Führungsvorsprüngen mehrere Zwischenräume für die Reinigungsflüssigkeit begrenzt. Außerdem kann auf der gesamten Länge des Aufnahmeelements ein umlaufend gleich großer Spalt zwischen ihm und der Durchgangsöffnung bestehen und somit ist ein gutes Strömungsverhalten der Reinigungsflüssigkeit gegeben.

Bei einer Wascheinrichtung, deren Düsenträger zusammen mit einem Kolben dicht in einem zylindrischen Gehäuseteil verschiebbar geführt ist, ist es weiterhin vorteilhaft, wenn das hülsenförmige Führungselement aus der Durchgangsöffnung des Düsenträgers mit einem äußeren Flansch herausragt, welcher an dem Deckel in der die Durchgangsöffnung verschließenden Stellung des Deckels und einem Kolbenring des Kolbens dicht anliegt. Das Führungselement kann leicht montiert werden, indem es klemmend in die Durchgangsöffnung eingeschoben wird, bis der Flansch an dem Kolbenring anliegt.

Eine zwischen dem Deckel und dem Düsenträger angeordnete Dichtung kann leicht und schnell montiert werden, wenn die Dichtung scheibenförmig ausgeführt ist und mit einem zentral liegenden Loch auf das Aufnahmeelement bis zum Deckel hin aufgeschoben ist. Die Dichtung ist in Verstellrichtung des Düsenträgers sicher an dem Deckel arretiert, wenn die Dichtung mit dem Rand ihres zentral liegenden Loches in eine umlaufende Nut des Deckels eingreift. Wegen der Arretierung der Dichtung in Verstellrichtung kann die Dichtung beim Abheben des Deckels nicht am Düsenträger verbleiben und die Durchgangsöffnung weiter verschließen. Eine zusätzliche Sicherheit besteht, wenn der Deckel mit einer umlaufenden Dichtungskante an dem Düsenträger und mit einer anderen an dem Deckel anliegt und innerhalb der umlaufenden Dichtungskanten mit einer Druckausgleichsöffnung versehen ist. Dadurch wird verhindert, daß sich die Dichtung beim Abheben des Deckels an dem Düsenträger festsaugt.

Weiterhin ist es vorteilhaft, wenn das stangenartige Halteelement an seinem zur Düse weisenden Ende einen Kopf aufweist, welcher der ortsfeste Anschlag für den Deckel ist und mit Spiel in dem Aufnahmeelement verschiebbar geführt ist. Dadurch ist der Deckel zusätzlich über den Kopf des stangenförmigen Halteelements radial zur Verstellrichtung genau fixiert.

Die Montage des stangenförmigen Halteelements ist leicht und schnell durchführbar, wenn es mit dem von der Düse wegweisenden Endabschnitt selbstrastend in eine Hinterschneidung eines Gehäuses des Düsenträgers einsetzbar ist. Die Hinterschneidung ist durch ein einfach gestaltetes verstellbares Werkzeugteil herstellbar, wenn sie durch eine Zuleitungsöffnung des Gehäuses hindurch entformbar ist.

Bei einer vorteilhaften Weiterbildung der Erfindung liegt an der der Düse abgewandten Seite des Deckels eine Druckfeder an, welche im entspannten Zustand eine kegelstumpfförmige Schraubenfeder ist, die mit ihrem den kleinen Durchmesser aufweisenden Ende das stangenförmige Halteelement mit Spiel umgibt und an dem Deckel auf der der Düse abgewandten Seite unter Vorspannung anliegt, während die Schraubenfeder mit ihrem den großen Außendurchmesser aufweisenden Ende sich an dem Gehäuse des Düsenträgers abstützt. Dadurch ist die Schraubenfeder in jeder Stellung des Düsenträgers, ohne daß ein zusätzliches Arretierungsmittel notwendig ist, sicher gehalten. Die Schraubenfeder stellt sicher, daß der Deckel sowohl beim Aus-und Einfahren als auch in der Ruhestellung des Düsenträgers und an dem Anschlag dicht an dem Düsenträger anliegt.

Ein Ausführungsbeispiel nach der Erfindung ist in der Zeichnung dargestellt, und zwar zeigen
- Figur 1: in einem mittleren Längsschnitt eine Verstellvorrichtung einer Scheibenwascheinrichtung für Fahrzeugscheinwerfer mit einer Düse in zurückversetzter Ruhelage;
- Figur 2: die Verstellvorrichtung nach Figur 1, mit ausgefahrener Düse kurz vor ihrer Arbeitsstellung und mit geschlossenem Ventil und
- Figur 3: die Verstellvorrichtung nach Figur 2, mit der Düse in Gebrauchsstellung und mit geöffnetem Ventil.

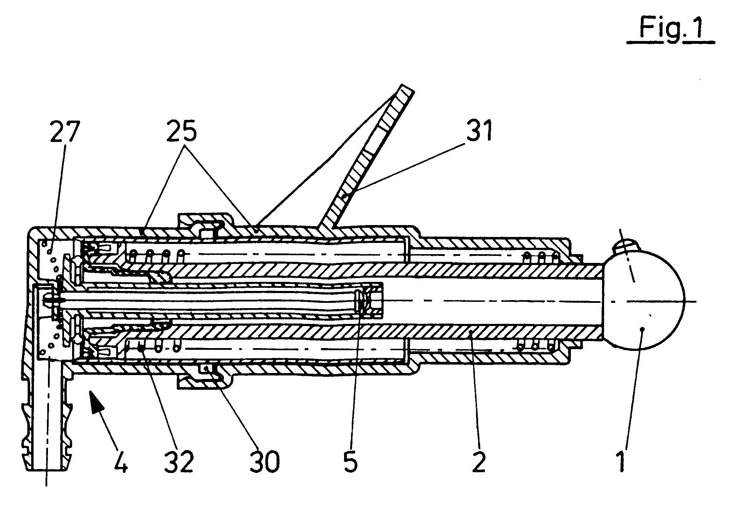

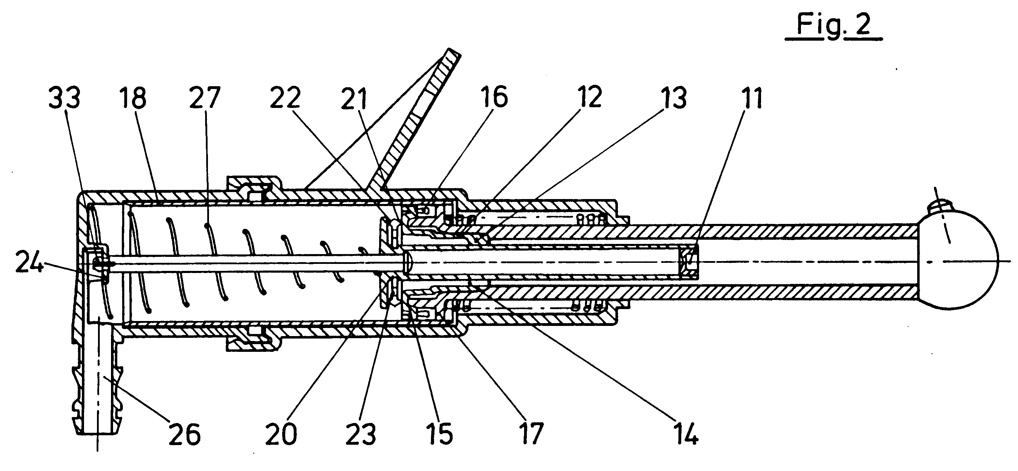

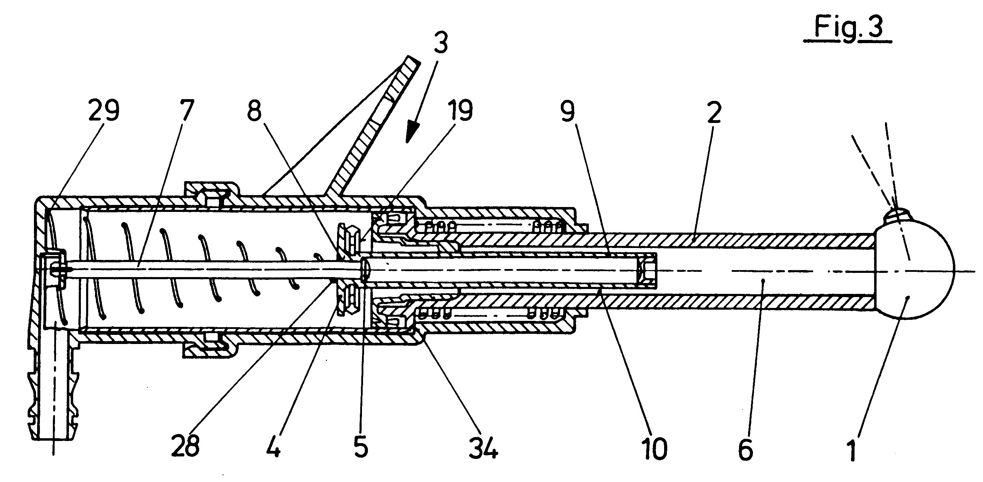

Eine Verstellvorrichtung einer Scheibenwascheinrichtung für Fahrzeugscheinwerfer weist ein zylinderförmiges Gehäuse (25) auf, welches aus Kunststoff hergestellt ist und aus einem Gehäuseoberteil und einem Gehäuseunterteil besteht. Das Gehäuseober-und -unterteil des Gehäuses (25) sind unter Zwischenschaltung einer Dichtung (30) ineinandergesteckt. Das Gehäuseoberteil weist eine nach oben gerichtete Strebe (31) auf, mit welcher die Verstellvorrichtung an einer Karosserie des Fahrzeuges befestigbar ist. Die Dichtung (30) liegt an der Mantelfläche eines aus Metall bestehenden zylindrischen Gehäuseteils (18) dicht an. In dem zylindrischen Gehäuseteil (18) ist ein Kolben (17) mit seinem Kolbenring (16) verschiebbar geführt. Der Kolben (17) ist einstückig mit einem rohrförmigen Düsenträger (2) aus Kunststoff hergestellt. Der Düsenträger (2) ragt mit dem von dem Kolben (17) wegweisenden Endabschnitt aus einer Öffnung des Gehäuses (25) heraus und weist an dem aus dem Gehäuse (25) herausragenden Endabschnitt eine Düse (1) auf. Der Düsenträger (2) ist von einer zylindrischen Schraubenfeder (32) umgeben, welche unter Vorspannung zwischen dem Kolben (17) und dem Gehäuse (25) eingespannt ist. Der rohrförmige Düsenträger (2) weist eine Durchgangsöffnung (6) auf, welche zum Durchtritt von Reinigungsflüssigkeit dient. Am Kolben (17) erweitert sich die Durchgangsöffnung (6) nach außen hin trichterförmig. In den trichterförmigen Abschnitt der Durchgangsöffnung (6) ist ein aus Kunststoff bestehendes hülsenförmiges Führungselement (12) mit Preßsitz eingeschoben. Das Führungselement (12) liegt mit einem umlaufenden Flansch (15) dicht an dem Kolbenring (16) des Kolbens (17) an und weist an dem zur Düse (1) hin gerichteten Endabschnitt drei radial nach innen gerichtete Führungsvorsprünge (13) für ein rohrförmiges Aufnahmeelement (9) auf. Für die Reinigungsflüssigkeit besteht zwischen dem rohrförmigen Aufnahmeelement (9) und dem rohrförmigen Düsenträger (2) umlaufend ein Spalt (10) und zwischen den Führungsvorsprüngen (13) jeweils ein Zwischenraum (14). Das rohrförmige Aufnahmeelement (9) ist an dem zur Düse (1) hin gerichteten Ende durch einen Stopfen (11) dicht verschlossen und an dem anderen Ende einstückig mit einem Deckel (4) eines Ventils (3) aus Kunststoff hergestellt. Auf das rohrförmige Aufnahmeelement (9) ist eine scheibenförmige Dichtung (19) mit einem zentral liegenden Loch aufgeschoben, welche mit einer äußeren umlaufenden Dichtungskante (22) dicht an der Innenseite des Deckels (4) anliegt und mit einer äußeren umlaufenden Dichtungskante (21) dicht an den Flansch (15) des Führungselements (12) anlegbar ist. Die scheibenförmige Dichtung (19) greift mit dem Rand ihres zentral liegenden Loches in eine umlaufende Nut (20) des Deckels (4) bzw. des Aufnahmeelements (9) ein. In die scheibenförmige Dichtung (19) sind zwischen den Dichtungskanten (21 und 22) und dem Rand des zentral liegenden Loches der Dichtung (19) mehrere Druckausgleichsöffnungen (23) eingebracht. Der Deckel (4) und die scheibenförmige Dichtung (19) weisen annähernd einen gleich großen Außendurchmesser auf und ihr äußerer umlaufender Rand ist zum zylindrischen Gehäuseteil (18) beabstandet. In den Deckel (4) ist eine zentral liegende Öffnung (8) eingebracht, welche zum dichten Inneren des rohrförmigen Aufnahmeelements (9) führt. In der Öffnung (8) des Deckels (4) ist ein stangenförmiges Halteelement (7) mit großem Spiel verschiebbar. Das stangenförmige Halteelement (7) hintergreift im Inneren des rohrförmigen Halteelements (9) mit einem Anschlag (5), welcher von einem am freien Ende des stangenförmigen Halteelements (7) angeformten Kopf gebildet ist, den inneren Öffnungsrand der Öffnung (8). Das stangenförmige Halteelement (7) weist an dem von der Düse (1) wegweisenden Endabschnitt federnde Rastnasen (33) auf, welche selbstrastend in eine Hinterschneidung (24) des Gehäuseunterteils des Gehäuses (25) eingreifen. Die Hinterschneidung ist durch eine in das Gehäuse (25) eingebrachte seitliche Zuleitungsöffnung (26) für die Reinigungsflüssigkeit hindurch entformbar. Das stangenförmige Halteelement (7) ist von einer kegelstumpfförmigen Schraubenfeder (27) umgeben, welche unter Vorspannung zwischen dem Gehäuseunterteil des Gehäuses (25) und dem Deckel (4) eingesetzt ist und dazu dient, den Deckel (4) mit seiner Dichtung (19) gegen den Flansch (15) zu drücken. Die kegelstumpfförmige Schraubenfeder (27) liegt mit dem Ende ihres kleinen Durchmessers an dem Deckel (4) und mit dem Ende ihres großen Durchmessers an dem Gehäuse (25) an. Beim Einschalten einer nicht dargestellten Druckerzeugungseinrichtung für die Reinigungsflüssigkeit strömt die Reinigungsflüssigkeit durch die Zuleitungsöffnung (26) in das Innere des Gehäuses (25) ein. Durch den Druck der Reinigungsflüssigkeit wird der Kolben (17) zusammen mit dem Deckel (4) in dem zylindrischen Gehäuseteil (18) bewegt. Dabei verstellt sich die Düse (1) von einer Ruhelage, welche in Figur 1 gezeigt ist, in eine in Figur 3 gezeigte Arbeitsstellung. In der in Figur 2 dargestellten Stellung der Düse (1) schlägt der Deckel (4) gegen den Anschlag (5) des in Verstellrichtung an dem Gehäuse (25) arretierten stangenförmigen Halteelements (7). Da sich das stangenförmige Halteelement (7) nun außerhalb des rohrförmigen Aufnahmeelements (9) befindet, ist das Innere des rohrförmigen Aufnahmeelements (9) vollständig mit Reinigungsflüssigkeit gefüllt, welche wegen dem großen Spiel zwischen dem stangenförmigen Halteelement (7) und der Öffnung (8) des Deckels (4) in den Innenraum des rohrförmigen Halteelements (9) gelangt. Nach dem Anschlagen des Deckels hebt der Deckel (4) zusammen mit der scheibenförmigen Dichtung (19) von dem Flansch (15) des Düsenträgers (2) ab. Durch den Druck der Reinigungsflüssigkeit fährt der Düsenträger (2) weiter, bis der Kolben (17) gegen eine umlaufende Schulter (34) des Gehäuses (25) anschlägt. Die Düse (1) befindet sich dann in ihrer Gebrauchsstellung. In der Gebrauchsstellung strömt die Reinigungsflüssigkeit an dem Deckel (4) und der Dichtung (19) vorbei in die Durchgangsöffnung (6) des Düsenträgers (2) und tritt aus der Düse (1) in einem von Tröpfchen gebildeten Sprühkegel aus. Beim Auftreffen der Tröpfchen auf eine Abschlußscheibe des Fahrzeugscheinwerfers lösen sich Schmutzteilchen von der Abschlußscheibe und werden von der Reinigungsflüssigkeit weggespült. Nach dem Abschalten einer Druckerzeugungseinrichtung drückt die zylindrische Schraubenfeder (32) den Düsenträger (2) gegen die Kraft der kegelstumpfförmigen Schraubenfeder (27) in seine Ruhelage. Die Funktion der Verstellvorrichtung wäre auch ohne die kegelstumpfförmige Schraubenfeder (27) gegeben. Die Schraubenfeder (27) stellt sicher, daß beim Zurückfahren des Düsenträgers (2) das Ventil möglichst schnell wieder schließt und in der Ruhestellung des Düsenträgers (2) das Ventil (3) auch dann geschlossen ist, wenn der Deckel (4) wegen einem Anschlag zwischen der Düse (1) und der Karosserie (nicht dargestellt) nicht genau seine vorgesehene Endlage einnimmt. Würde in der Ruhelage der Düse (1) das Ventil (3) nicht dicht schließen, so könnte, wenn ein Behälter für die Reinigungsflüssigkeit höher als die Verstellvorrichtung angeordnet ist, die gesamte Reinigungsflüssigkeit über die Verstellvorrichtung auslaufen.

### Bezugszeichenliste

### Scheibenwascheinrichtung für Kraftfahrzeuge, insbesondere Fahrzeugscheinwerfer

- 1: Düse
- 2: Düsenträger
- 3: Ventil
- 4: Deckel
- 5: Anschlag
- 6: Durchgangsöffnung
- 7: stangenförmiges Halteelement
- 8: Öffnung
- 9: Aufnahmeelement
- 10: Spalt
- 11: Stopfen
- 12: hülsenförmiges Führungselement
- 13: Führungsvorsprünge
- 14: Zwischenräume
- 15: Flansch
- 16: Kolbenring
- 17: Kolben
- 18: zylindrisches Gehäuseteil
- 19: Dichtung
- 20: Nut
- 21: Dichtungskante
- 22: Dichtungskante
- 23: Druckausgleichsöffnung
- 24: Hinterschneidung
- 25: Gehäuse
- 26: Zuleitungsöffnung
- 27: Druckfeder
- 28: Ende mit kleinem Durchmesser
- 29: Ende mit großem Durchmesser
- 30: Dichtung
- 31: Stebe
- 32: Schraubenfeder
- 33: Rastnasen
- 34: Schulter

## Patentansprüche

1. Scheibenwascheinrichtung für Kraftfahrzeuge, insbesondere für Fahrzeugscheinwerfer, mit einem eine Düse (1) aus einer Ruhelage in eine Arbeitsstellung ausfahrbaren Düsenträger (2) und mit einem Ventil (3), welches mit einem eine Aus- und Einfahrbewegung des Düsenträgers (2) mitmachenden Deckel (4) versehen ist, der zusammen mit dem Düsenträger (2) von einer unter Druck gebrachten Reinigungsflüssigkeit bewegbar ist und der kurz vor Erreichen der Arbeitsstellung der Düse (1) gegen einen ortsfesten Anschlag (5) anschlägt und von einer eine Durchgangsöffnung (6) des Düsenträgers (2) verschließenden Stellung vom Düsenträger (2) abhebt, dadurch gekennzeichnet, daß der ortsfeste Anschlag (5) an dem freien Endabschnitt eines ortsfesten, stangenförmigen Halteelements (7) angebracht ist und den Rand einer Öffnung (8) des Deckels (4) hintergreift, durch welche das Halteelement (7) mit Spiel hindurchgeht und daß das stangenartige Halteelement (7) in Ruhelage der Düse (1) in ein dicht an den Deckel (4) angebrachtes dichtes Aufnahmelement (9) eintaucht, welches in der Durchgangsöffnung (6) des Düsenträgers (2) angeordnet ist und zwischen welchem und der Innenseite der Durchgangsöffnung (6) ein Spalt (10) für die Reinigungsflüssigkeit besteht.

2. Scheibenwascheinrichtung nach Anspruch 1, dadurch gekennzeichnet, daß das Aufnahmeelement (9) rohrförmig ausgeführt ist, an seinem in Richtung der Düse (1) weisenden Endabschnitt durch einen Stopfen (11) dicht verschlossen ist, mit dem anderen Endabschnitt einstückig mit dem Deckel (4) ausgeführt ist und die Öffnung (8) für das stangenförmige Halteelement (7) umgibt.

3. Scheibenwascheinrichtung nach Anspruch 1 oder 2, dadurch gekennzeichnet, daß in die Durchgangsöffnung (6) des Düsenträgers (2) ein hülsenförmiges Führungselement (12) eingesetzt ist, welches mit radial nach innen gerichteten Führungsvorsprüngen (13) an eine zylindrische Mantelfläche des Aufnahmeelementes (9) angrenzt und mit seinen Führungsvorsprüngen (13) mehrere Zwischenräume (14) für die Reinigungsflüssigkeit begrenzt.

4. Scheibenwascheinrichtung nach Anspruch 3, dadurch gekennzeichnet, daß das hülsenförmige Führungselement (12) aus der Durchgangsöffnung (6) des Düsenträgers (2) mit einem äußeren umlaufenden Flansch (15) herausragt, an welchem der Deckel (4) in der die Durchgangsöffnung (6) verschließenden Stellung dicht anliegt und welcher dicht an einem Kolbenring (16) eines starr mit dem Düsenträger (2) ausgeführten Kolbens (17) anliegt, welcher in einem zylindrischen Gehäuseteil (18) verschiebbar geführt ist.

5. Scheibenwascheinrichtung, nach einem der Ansprüche 1 bis 4, dadurch gekennzeichnet, daß der Deckel (4) an dem Düsenträger (2) mit einer scheibenförmigen Dichtung (19) dicht anliegt, welche mit einem zentral liegenden Loch auf das Aufnahmeelement (9) bis zum Deckel (4) hin aufgeschoben ist.

6. Scheibenwascheinrichtung nach Anspruch 5, dadurch gekennzeichnet, daß die scheibenförmige Dichtung (19) mit dem Rand ihres zentral liegenden Loches in eine umlaufende Nut (20) des Deckels (4) eingreift und in dieser in Verstellrichtung des Deckels (4) arretiert ist.

7. Scheibenwascheinrichtung nach Anspruch 5 oder 6, dadurch gekennzeichnet, daß der Deckel (4) mit einer umlaufenden Dichtungskante (21) an dem Düsenträger (2) und mit einer anderen (22) an dem Deckel (4) anliegt und innerhalb der umlaufenden Dichtungskanten (21 und 22) mit mindestens einer Druckausgleichsöffnung (23) versehen ist.

8. Scheibenwascheinrichtung nach einem der Ansprüche 1 bis 7, dadurch gekennzeichnet, daß das stangenartige Halteelement (7) an seinem zur Düse (1) weisenden Ende einen Kopf aufweist, welcher als ortsfester Anschlag (5) für den Deckel (4) dient und mit Spiel in dem Aufnahmeelement (9) verschiebbar geführt ist.

9. Scheibenwascheinrichtung nach einem der Ansprüche 1 bis 8, dadurch gekennzeichnet, daß das stangenförmige Halteelement (7) mit dem von der Düse (1) wegweisenden Endabschnitt selbstrastend in eine Hinterschneidung (24) eines Gehäuses (25) des Düsenträgers (2) eingreift, wobei die Hinterschneidung (24) durch eine Zuleitungsöffnung (26) des Gehäuses (25) hindurch entformbar ist.

10. Scheibenwascheinrichtung nach einem der Ansprüche 1 bis 9, dadurch gekennzeichnet, daß an der der Düse (1) abgewandten Seite des Deckels (4) eine Druckfeder (27) anliegt, welche im entspannten Zustand eine kegelstumpfförmige Schraubenfeder ist, die mit ihrem den kleineren Durchmesser aufweisenden Ende (28) das stangenartige Halteelement (7) mit Spiel umgibt und an dem Deckel (4) auf der der Düse (1) abgewandten Seite unter Vorspannung anliegt, während die Schraubenfeder mit ihrem den großen Außendurchmesser aufweisenden Ende (29) sich an dem Gehäuse (25) des Düsenträgers (25) abstützt.

## Claims

1. Shield washing device for motor vehicles, especially for vehicle head lights [translator's note: the German word 'Scheibe' bears many meanings, including 'screen' (as in windscreen) and 'lens' (as in headlamp lens); herein it is translated as 'shield' which is to be taken to include those meanings], having a nozzle support (2) which can extend a nozzle (1) from a rest position to a working position, and having a valve (3) provided with a cover (4) which moves with the nozzle support (2) in its extending and retracting movements and which together with the nozzle support (2) is movable by a pressurised cleaning liquid and which shortly before reaching the working position of the nozzle (1) strikes against a fixed stop (5) and lifts off from a position on the nozzle support (2) wherein it closes off a passage (6) of the nozzle support (2), characterised in that the fixed stop (5) is arranged at the free end section of a fixed rod shaped retaining element (7) and engages behind the edge of an opening (8) of the cover (4) through which the retaining element (7) passes with clearance, and in that the rod like retaining element (7), in the rest position of the nozzle (1), is plunged into a tight receiving element (9) which is arranged tight on the cover (4), the receiving element (9) being arranged in the passage (6) of the nozzle support (2) and there being a gap (10) for the cleaning liquid between the receiving element (9) and the inner surface of the passage (6).

2. Shield washing device according to claim 1, characterised in that the receiving element (9) is made tubular, is closed tight by a stopper (11) at its end section pointing in the direction of the nozzle (1), is at its other end section made in one piece with the cover (4), and surrounds the opening (8) for the rod shaped retaining element (7).

3. Shield washing device according to claim 1 or 2, characterised in that a sleeve shaped guide element (12) is inserted in the passage (6) of the nozzle support (2), the sleeve shaped guide element (12) adjoining with radially inwardly directed guide projections (13) a cylindrical outer surface of the receiving element (9) and defining with its guide projections (13) a plurality of intermediate spaces (14) for the cleaning liquid.

4. Shield washing device according to claim 3, characterised in that the sleeve shaped guide element (12) projects from the passage (6) of the nozzle support (2) with an outer circumferential flange (15) against which the cover (4) rests tight in the position in which the passage (6) is closed off, and which rests tight against a piston ring (16) of a piston (17) made rigidly with the nozzle support (2), the piston (17) being displaceably guided in a cylindrical housing part (18).

5. Shield washing device according to one of claims 1 to 4, characterised in that the cover (4) rests tight against the nozzle support (2) by way of a disc shaped seal (19) which, with a centrally disposed hole, is pushed onto the receiving element(9) as far as the cover (4).

6. Shield washing device according to claim 5, characterised in that the disc shaped seal (19), with the edge of its centrally disposed hole, engages in a circumferential groove (20) of the cover (4) and is held therein with respect to the displacement direction of the cover (4).

7. Shield washing device according to claim 5 or 6, characterised in that the cover (4) rests against the nozzle support (2) with a circumferential sealing rim (21) and against the cover (4) with another sealing rim (22) and is provided with at least one pressure equalising opening (23) within the circumferential sealing rims (21 and 22).

8. Shield washing device according to one of claims 1 to 7, characterised in that the rod like retaining element (7) has a head at its end pointing towards the nozzle (1) which serves as the fixed stop (5) for the cover (4) and is displaceably guided with clearance in the receiving element (9).

9. Shield washing device according to one of claims 1 to 8, characterised in that the rod shaped retaining element (7), with its end section pointing away from the nozzle (1), engages self latchingly in an undercut (24) of a housing (25) of the nozzle support (2), the undercut (24) being detachable from the mould via an inflow opening (26) of the housing (25).

10. Shield washing device according to one of claims 1 to 9, characterised in that a compression spring (27) rests against the side of the cover (4) remote from the nozzle (1), which in the relaxed condition is a coil spring shaped like a truncated cone and at its end (28) that has the smaller diameter surrounds with clearance the rod like retaining element (7) and rests under pre-load against the side of the cover (4) remote from the nozzle (1), whereas the coil spring with its end (29) that has the large outer diameter bears against the housing (25) of the nozzle support (25).

## Revendications

1. Lave-glace pour véhicules, en particulier pour phares de véhicules, comportant un porte-buse susceptible de sortir une buse (1) depuis une position de repos jusque dans une position de travail, et une soupape (3) pourvue d'un couvercle (4) qui suit un mouvement de sortie et d'entrée du porte-buse (2), ledit couvercle étant susceptible d'être déplacé conjointement avec le porte-buse (2) par un liquide de nettoyage mis sous pression et butant contre une butée (5) stationnaire juste avant l'arrivée de la buse (1) dans sa position de travail, et se soulevant du porte-buse (2) depuis une position de fermeture d'une ouverture de passage (6) du porte-buse (2), caractérisé en ce que la butée stationnaire (5) est montée sur le tronçon d'extrémité libre d'un élément de retenue (7) stationnaire en forme de barre et en ce qu'elle s'engage derrière le bord d'une ouverture (9) du couvercle (4), à travers laquelle l'élément de retenue (7) passe avec jeu, et en ce que l'élément de retenue (7) en forme de barre plonge, en position de repos de la buse (1), dans un élément de réception (9) étanche monté de manière étanche sur le couvercle (4), lequel est agencé dans l'ouverture de passage (6) du porte-buse (2) et en ce qu'une fente (10) pour le liquide de nettoyage est formée entre ledit élément de réception et la face intérieure de l'ouverture de passage (6).

2. Lave-glace selon la revendication 1, caractérisé en ce que l'élément de réception (9) est réalisé tubulaire, fermé de manière étanche par un bouchon (11) sur son tronçon d'extrémité orienté dans la direction de la buse (1), réalisé par l'autre tronçon d'extrémité d'une seule pièce avec le couvercle (4) et entoure l'ouverture (8) pour l'élément de retenue (7) en forme de barre.

3. Lave-glace selon l'une ou l'autre des revendications 1 et 2, caractérisé en ce que dans l'ouverture de passage (6) du porte-buse (2) est mis en place un élément de guidage (12) en forme de douille qui est adjacent à une surface enveloppe cylindrique de l'élément de réception (9) avec des saillies de guidage (13) dirigées radialement vers l'intérieur, et qui délimite avec ses saillies de guidage (13) plusieurs espaces intermédiaires (14) pour le liquide de nettoyage.

4. Lave-glace selon la revendication 3, caractérisé en ce que l'élément de guidage (12) en forme de douille fait saillie hors de l'ouverture de passage (6) du porte-buse (2) avec une bride (15) périphérique extérieure, sur laquelle le couvercle (5) est en appui étanche dans la position de fermeture de l'ouverture de passage (6) et laquelle repose de manière étanche sur un segment (16) d'un piston (17) réalisé rigide avec le porte-buse (2), ledit piston étant guidé à déplacement dans une partie de boîtier (18) cylindrique.

5. Lave-glace selon l'une quelconque des revendications 1 à 4, caractérisé en ce que le couvercle (4) repose de manière étanche sur le porte-buse (2) avec un joint (19) en forme de disque, lequel est enfilé avec un trou central sur l'élément de réception (9) jusqu'au couvercle (4).

6. Lave-glace selon la revendication 5, caractérisé en ce que le joint (19) en forme de disque s'engage avec le bord de son trou central dans une rainure (20) périphérique du couvercle (4) et est arrêté dans celle-ci en direction de déplacement du couvercle (4).

7. Lave-glace selon l'une ou l'autre des revendications 5 et 6, caractérisé en ce que le couvercle (4) repose avec une arête d'étanchéité (21) périphérique sur le porte-buse (2) et avec l'autre arête (22) sur le couvercle (4), et est pourvu d'au moins une ouverture de compensation de pression (23) à l'intérieur des arêtes d'étanchéité (21 et 22) périphériques.

8. Lave-glace selon l'une quelconque des revendications 1 à 7, caractérisé en ce que l'élément de retenue (7) en forme de barre présente à son extrémité orientée vers la buse (1) une tête qui sert de butée (5) stationnaire pour le couvercle (4) et qui est guidée à déplacement et avec jeu dans l'élément de réception (9).

9. Lave-glace selon l'une quelconque des revendications 1 à 8, caractérisé en ce que l'élément de retenue (7) en forme de barre s'engage avec le tronçon d'extrémité orienté à l'opposé de la buse (1) en s'enclenchant automatiquement dans une contre-dépouille (24) d'un boîtier (25) du porte-buse (2), la contre-dépouille (24) étant déformable à travers une ouverture d'amenée (26) du boîtier (25).

10. Lave-glace selon l'une quelconque des revendications 1 à 9, caractérisé en ce que sur le côté du couvercle (4) détourné de la buse (1) repose un ressort de pression (27) qui, à l'état détendu, est un ressort hélicoïdal tronconique qui entoure avec jeu l'élément de retenue (7) en forme de barre avec son extrémité de petit diamètre et qui repose sous précontrainte sur le couvercle (4) du côté détourné de la buse (1), tandis que le ressort hélicoïdal prend appui sur le boîtier (25) du porte-buse (2) avec son extrémité (29) de grand diamètre extérieur.
